# EUROPÄISCHE PATENTANMELDUNG

(11) **EP 2 133 763 A1**
(43) Veröffentlichungstag der Anmeldung: **16.12.2009**
(21) Anmeldenummer: 08010730.3
(22) Anmeldetag: 12.06.2008
(51) Int. Cl.: G05B 19/042, H04L 12/64

(54) **Verfahren zum Betrieb eines Automatisierungssystems**

(71) Anmelder: SIEMENS AKTIENGESELLSCHAFT, 80333 München (DE)
(72) Erfinder: Biehler, Georg, 90453 Nürnberg (DE); Löwe, Andreas, 92318 Neumarkt (DE); Molzahn, Ines, 91052 Erlangen (DE)

(57) **Zusammenfassung**

Es wird ein Verfahren zum Betrieb eines Automatisierungssystems (10) mit einer Anzahl kommunikativ zumindest mit einer zentralen Einheit (12) verbundener Automatisierungsgeräte (14-18), wobei jedes Automatisierungsgerät (14-18) Kommunikation entsprechend einem Sendetakt (28-32) abwickelt, vorgeschlagen, bei dem die zentrale Einheit (12) in einer Datenbasis (34) für jedes kommunikativ erreichbare Automatisierungsgerät (14-18) eine Information zu dem diesem möglichen Sendetakt (28-32) speichert und die zentrale Einheit (12) Kommunikation mit jedem Automatisierungsgerät (14-18) mit dessen Sendetakt (28-32) abwickelt.

## Beschreibung

Die Erfindung betrifft ein Verfahren zum Betrieb eines Automatisierungssystems. Automatisierungssysteme sind an sich bekannt und umfassen üblicherweise eine Anzahl kommunikativ zumindest mit einer zentralen Einheit verbundener Automatisierungsgeräte, also z. B. Steuerungsgeräte, Bedien- und Beobachtungsgeräte, dezentrale Peripheriegeräte, busfähige Sensoren und Aktoren usw., wobei jedes Automatisierungsgerät Kommunikation entsprechend einem Sendetakt abwickelt.

In dem Automatisierungssystem sind die kommunikativ verbundenen Automatisierungsgeräte und die oder jede zu deren Steuerung vorgesehene zentrale Einheit für eine Automatisierungslösung bestimmt und steuern und/oder überwachen entsprechend einen jeweils zu automatisierenden technischen Prozess. Neben den von dem Automatisierungssystem umfassten Kommunikationsteilnehmern ist ein wesentlicher Bestandteil das für deren kommunikative Verbindung vorgesehene Netzwerk. Zur Anbindung an dieses Netzwerk weist jeder Kommunikationsteilnehmer einen Busanschluss auf. In einem Automatisierungssystem mit einem zugrunde liegenden Netzwerk, z. B. Ethernet, IEEE 802.3, WLAN IEEE 802.11, CAN usw., in dem die Kommunikation z. B. nach dem unter der Bezeichnung PROFINET bekannten Kommunikationsprotokoll abgewickelt wird, weist jedes Gerät einen Busanschluss zum Anschluss an das Netzwerk auf und eine projektierte Position des jeweiligen Gerätes in einer Hierarchie des Automatisierungssystems bestimmt einzelne Geräte als Master (IO-Controller) und andere Geräte als Slave (IO-Device). In einem Automatisierungssystem nimmt die zentrale Einheit eine besondere hierarchische Position ein, so dass zumindest die zentrale Einheit im Netzwerk als Master oder IO-Controller fungiert. Beispiele für Slaves sind demgegenüber Peripheriebaugruppen, busfähige Sensoren und Aktoren usw., die in der Hierarchie des Automatisierungssystems im Vergleich zur zentralen Einheit eine nachgeordnete Position einnehmen. Der Datenaustausch zwischen IO-Controller und IO-Devices erfolgt mittels zyklischer Echtzeitkommunikation. Für eine derartige Echtzeitkommunikation wird die kontinuierliche Zeit in aufeinander folgende zyklische Zeitabschnitte gleicher Zeitdauer zerlegt, die natürliche, kontinuierliche Zeit also diskretisiert. Im Folgenden werden diese Zeitabschnitte Sendetakte genannt. Kommunikationsteilnehmer, also IO-Controller und IO-Devices, die Daten untereinander mit einer derartigen zyklischen Echtzeitkommunikation austauschen, müssen bisher mit dem gleichen Sendetakt betrieben werden. Daraus ergibt sich bisher die Notwendigkeit, dass die oder jede zentrale Einheit, also der oder jeder IO-Controller, immer mit einem Sendetakt betrieben werden muss, der von allen anderen vom Automatisierungssystem umfassten Automatisierungsgeräten (IO-Devices) unterstützt wird. Dies führt im allgemeinen dazu, dass in Anlagenkonfigurationen, in denen Geräte unterschiedliche Sendetakte unterstützen, diejenigen Teilnehmer, die schnellere/höhere Sendetakte unterstützen, nicht mit diesen schnelleren/höheren Sendetakten betreibbar sind, wenn Teilnehmer existieren, die diesen Sendetakt nicht unterstützen. Üblicherweise unterstützen neu entwickelte IO-Controller mehr Sendetakte als von einer Automatisierungslösung/einem Automatisierungssystem bereits umfasste IO-Devices, insbesondere schnellere oder höhere Sendetakte. Wenn ein Anlagenbetreiber die höhere Leistungsfähigkeit neuer IO-Controller ausnutzen will, muss bisher entweder an diversen IO-Devices ein Update, also z. B. ein Firmware-Update, durchgeführt werden oder die IO-Devices selbst sind gegen neuere IO-Devices mit einer entsprechend verbesserten Kommunikationsfähigkeit auszutauschen.

Eine Aufgabe der vorliegenden Erfindung besteht entsprechend darin, ein Verfahren zum Betrieb eines Automatisierungssystems anzugeben, bei dem davon umfasste Kommunikationsteilnehmer je für sich entsprechend der jeweiligen Kommunikationsmöglichkeiten betreibbar sind, so dass auf der einen Seite bereits im Einsatz befindliche Kommunikationsteilnehmer mit eher geringer Kommunikationsleistungsfähigkeit auch zusammen mit neueren Geräten mit erhöhter Kommunikationsleistungsfähigkeit betreibbar sind, ohne dass dazu die Leistungsfähigkeit der neueren Geräte auf einem kleinsten gemeinsamen Nenner reduziert werden muss.

Diese Aufgabe wird erfindungsgemäß mit den Merkmalen des Anspruchs 1 gelöst. Dazu ist bei einem Verfahren zum Betrieb eines Automatisierungssystems mit einer Anzahl kommunikativ zumindest mit einer zentralen Einheit verbundener Automatisierungsgeräte, wobei jedes Automatisierungsgerät Kommunikation entsprechend einem für dieses jeweils festgelegten Sendetakt abwickelt, vorgesehen, dass die zentrale Einheit in einer Datenbasis für jedes kommunikativ erreichbare Automatisierungsgerät eine Information zu dem diesem Automatisierungsgerät möglichen Sendetakt speichert und dass die zentrale Einheit Kommunikation mit jedem Automatisierungsgerät mit dessen Sendetakt abwickelt.

Der Vorteil der Erfindung besteht also darin, dass die zentrale Einheit Kenntnis über die Kommunikationsleistungsfähigkeit jedes von dem Automatisierungssystem umfassten Automatisierungsgerätes hat und dass mit dieser Kenntnis die zentrale Einheit Kommunikation mit jedem Automatisierungsgerät mit dessen Sendetakt, also angepasst an die Kommunikationsleistungsfähigkeit des jeweiligen Automatisierungsgerätes, abwickelt.

Vorteilhafte Ausgestaltungen der Erfindung sind Gegenstand der Unteransprüche. Dabei verwendete Rückbeziehungen weisen auf die weitere Ausbildung des Gegenstandes des Hauptanspruches durch die Merkmale des jeweiligen Unteranspruches hin; sie sind nicht als ein Verzicht auf die Erzielung eines selbständigen, gegenständlichen Schutzes für die Merkmalskombinationen der rückbezogenen Unteransprüche zu verstehen. Des Weiteren ist im Hinblick auf eine Auslegung der Ansprüche bei einer näheren Konkretisierung eines Merkmals in einem nachgeordneten Anspruch davon auszugehen, dass eine derartige Beschränkung in den jeweils vorangehenden Ansprüchen nicht vorhanden ist.

Wenn die gerätespezifische Konfigurationsdatei Ergebnis eines Initialisierungsverfahrens beim Anlauf des Automatisierungssystems oder Ergebnis eines Projektierungsverfahrens der zentralen Einheit ist, werden die von der oder jeder zentralen Einheit in jedem Falle benötigten Daten zu angeschlossenen Kommunikationsteilnehmern zusammen mit den zur Ausführung des hier und nachfolgend beschriebenen Verfahrens benötigten Daten ermittelt. Die Daten stehen damit zum frühestmöglichen Zeitpunkt zur Verfügung, damit Kommunikation, die während des Initialisierungsverfahrens abläuft, sofern eine solche Kommunikation überhaupt auf Basis der Sendetakte abgewickelt wird, mit einer "Basiskommunikationsleistungsfähigkeit", also einem vergleichsweise niedrigen oder gar minimalen Sendetakt abgewickelt werden kann, so dass zunächst sichergestellt ist, dass alle Kommunikationsteilnehmer auf dieser Basis miteinander kommunizieren können. Nach Abschluss des Initialisierungsverfahrens kann sodann unmittelbar die Kommunikation zwischen allen von dem Automatisierungssystem umfassten Kommunikationsteilnehmern entsprechend der durch die Erfindung erreichbaren Optimierung erfolgen.

Die Datenbasis ist bevorzugt ein Ausschnitt oder ein Abschnitt einer gerätespezifischen Konfigurationsdatei, wobei eine derartige Konfigurationsdatei diverse Informationen zu den von den Automatisierungssystem umfassten Automatisierungsgeräten umfasst und sich darin eine Information für jedes Automatisierungsgerät auf dessen Kommunikationsleistungsfähigkeit bezieht. Eine gerätespezifische Konfigurationsdatei ist für die oder jede zentrale Einheit in einem Automatisierungssystem normalerweise in jedem Falle erforderlich, um z. B. sicherzustellen, dass eine kommunikative Verbindung zu jedem Gerät besteht, so dass im Fehlerfalle Ausnahmebehandlungen eingeleitet werden können. Die Verwendung der gerätespezifischen Konfigurationsdatei zum Speichern von Informationen zu einem jedem Automatisierungsgerät maximal möglichen Sendetakt bietet sich entsprechend als zentrale Ablage für derartige Daten an.

Zum Abwickeln von Kommunikation mit jedem Automatisierungsgerät derart, dass dessen Sendetakt verwendet wird, ist vorgesehen, dass ein dem jeweiligen Automatisierungsgerät maximal möglicher Sendetakt durch einen der zentralen Einheit maximal möglichen Sendetakt dividiert wird und das Divisionsergebnis als Untersetzung des Sendetaktes der zentralen Einheit für die Abwicklung der Kommunikation mit dem jeweiligen Automatisierungsgerät verwendet wird. Wenn der maximal mögliche Sendetakt eines jeden von dem Automatisierungssystem umfassten Kommunikationsteilnehmers hier und im Folgenden als dessen Kommunikationsleistungsfähigkeit aufgefasst wird, ergibt sich durch Division der jeweiligen Kommunikationsleistungsfähigkeiten und Verwendung des Divisionsergebnisses als Untersetzung des Sendetaktes der zentralen Einheit eine effizient handhabbare Möglichkeit zur Gewährleistung, dass die zentrale Einheit Kommunikation mit jedem Automatisierungsgerät mit dessen Sendetakt, also mit dessen Kommunikationsleistungsfähigkeit, abwickelt. Als Hintergrundinformation dazu, wie die Untersetzung des Sendetaktes eines Kommunikationsteilnehmers, also insbesondere der zentralen Einheit, realisiert werden kann, wird auf die Anmelderin der vorliegenden Erfindung zurückgehende EP 1 527 578 B1 verwiesen. Hinsichtlich der Division oder des Divisionsergebnisses ergibt sich aus der Situation eines Automatisierungsgeräteherstellers, der die Kommunikationsleistungsfähigkeiten einzelner Automatisierungsgeräte festlegen kann, so dass alle möglichen Sendetakte bekannt sind, dass als Divisionsergebnis nur ganzzahlige Ergebnisse vorkommen, insbesondere nur Potenzen von Zwei, also "1", "2", "4", usw. Wenn unganzzahlige Divisionsergebnisse vorkommen sollten, wird das Divisionsergebnis abgerundet.

Das beschriebene und nachfolgend weiter erläuterte Verfahren ist bevorzugt in Software und/oder Firmware implementiert. Entsprechend betrifft die Erfindung auch ein Computerprogramm zur Ausführung eines derartigen Verfahrens, das Computerprogrammanweisungen oder Microcodeanweisungen zur Implementierung der einzelnen Verfahrensschritte oder Verfahrensschrittfolgen umfasst, einen Datenträger mit einem solchen Computerprogramm, soweit Teile des Verfahrens in Software implementiert sind, also z.B. eine Diskette, ein EPROM und dergleichen und soweit Teile des Verfahrens in Firmware implementiert sind, entsprechend einen ASIC, einen FPGA oder ähnliches, und ein Computersystem, auf dem ein derartiges Computerprogramm geladen ist, also z. B. eine zentrale Einheit der eingangs beschriebenen Art, insbesondere eine so genannte Zentraleinheit einer speicherprogrammierbaren Steuerung mit einer für deren kommunikative Anbindung vorgesehenen Busschnittstelle, deren Funktionalität hier und im Folgenden im Detail beschrieben wird.

Nachfolgend wird ein Ausführungsbeispiel der Erfindung anhand der Zeichnung näher erläutert. Einander entsprechende Gegenstände oder Elemente sind in allen Figuren mit den gleichen Bezugszeichen versehen. Das oder jedes Ausführungsbeispiel ist nicht als Einschränkung der Erfindung zu verstehen. Vielmehr sind im Rahmen der vorliegenden Offenbarung zahlreiche Abänderungen und Modifikationen möglich, insbesondere solche Varianten und Kombinationen, die zum Beispiel durch Kombination oder Abwandlung von einzelnen in Verbindung mit den im allgemeinen oder speziellen Beschreibungsteil beschriebenen sowie in den Ansprüchen und/oder der Zeichnung enthaltenen Merkmalen bzw. Elementen oder Verfahrensschritten für den Fachmann im Hinblick auf die Lösung der Aufgabe entnehmbar sind und durch kombinierbare Merkmale zu einem neuen Gegenstand oder zu neuen Verfahrensschritten bzw. Verfahrensschrittfolgen führen.

Es zeigen
- FIG 1: ein Automatisierungssystem und
- FIG 2: eine Prinzipdarstellung zur Erläuterung wie eine von dem Automatisierungssystem umfasste zentrale Einheit Kommunikation mit jedem von dem Automatisierungssystem ebenfalls umfassten Automatisierungsgerät mit dessen Sendetakt abwickelt.

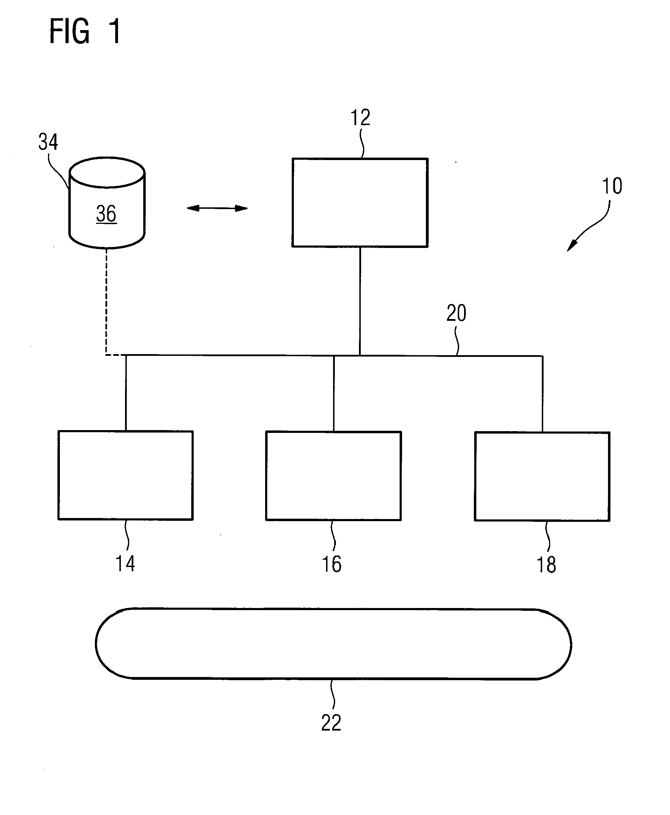

FIG 1 zeigt schematisch vereinfacht ein insgesamt mit 10 bezeichnetes Automatisierungssystem, das eine zentrale Einheit 12 und eine Anzahl kommunikativ zumindest mit der zentralen Einheit 12 verbundener Automatisierungsgeräte 14, 16, 18 umfasst. Die kommunikative Verbindung erfolgt dabei über einen Bus 20, insbesondere einen Feldbus, z. B. Ethernet, wobei als Kommunikationsprotokoll z. B. PROFINET zur Anwendung kommt.

Das Automatisierungssystem 10 ist in an sich bekannter Art und Weise zur Steuerung und/oder Überwachung eines nicht näher dargestellten technischen Prozesses 22 vorgesehen.

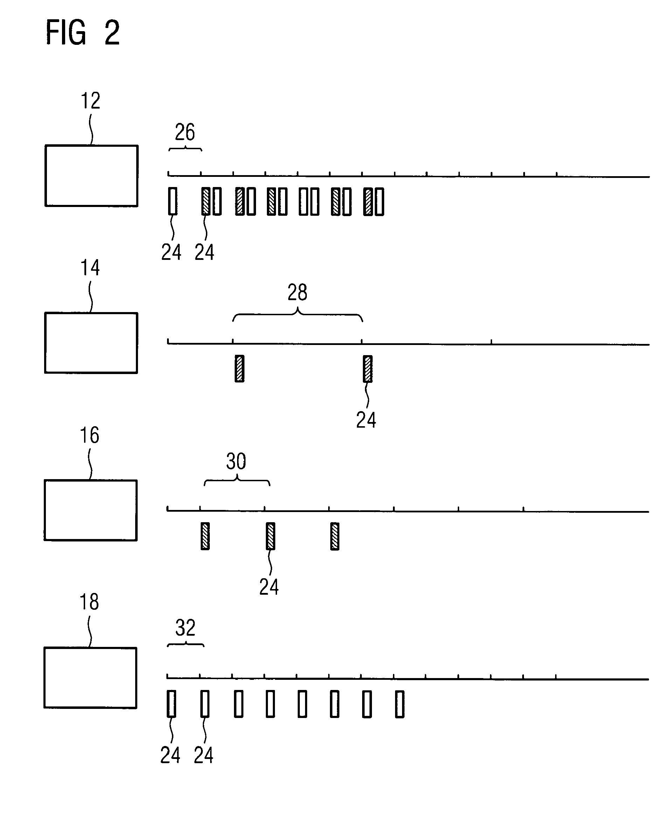

FIG 2 versucht darzustellen, dass bei dem Automatisierungssystem 10 (FIG 1) ein Datenaustausch durch Versenden von Datenpaketen 24 erfolgt, wobei für die zyklische Echtzeit Kommunikation und die auf dieser Basis erfolgende Übermittlung der Datenpakete 24 die kontinuierliche Zeit in aufeinander folgende zyklische Zeitabschnitte gleicher Dauer zerlegt wird (Diskretisierung der Zeit). Diese Zeitabschnitte werden im Folgenden als Sendetakte 26-32 bezeichnet. Auch anhand der graphischen Darstellung in FIG 2 ist bereits ersichtlich, dass die Sendetakte 26, 28, 30, 32 einzelner von dem Automatisierungssystem 10 umfasster Automatisierungsgeräte 14-18 unterschiedlich sein können.

Bisher müssen Teilnehmer der zyklischen Echtzeitkommunikation mit gleichem Sendetakt 26-32 betrieben werden, so dass z. B. eine vergleichsweise leistungsfähige (kurzer Sendetakt 26) zentrale Einheit 12 mit einem Sendetakt 26-32 betrieben werden muss, der von allen anderen vom Automatisierungssystem 10 umfassten Automatisierungsgeräten 14-18 unterstützt wird. Bei den dargestellten Verhältnissen weist eines der Automatisierungsgeräte 18 einen Sendetakt 32 auf, der genauso hoch ist, wie derjenige der zentralen Einheit 12, ein anderes Automatisierungsgerät 16 weist einen Sendetakt 30 auf, der im Vergleich dazu nur halb so schnell ist und ein weiteres Automatisierungsgerät 14 weist einen Sendetakt 28 auf, der im Vergleich zu diesem vorgenannten langsameren Sendetakt 30 nochmals nur halb so schnell ist, also im Vergleich zu den schnellen Sendetakten 26, 32 vier mal länger ist.

Für numerisch einfache Verhältnisse wird im Folgenden angenommen, dass der maximal mögliche Sendetakt 26 der zentralen Einheit 12 zweihundertundfünfzig Mikrosekunden (250µs) dauert. Entsprechend ergibt sich für die Dauer der Sendetakte 28, 30, 32 der Automatisierungsgeräte 14, 16, 18 eine Dauer von 1000µs, 500µs und 250µs. Um zu erreichen, dass die zentrale Einheit 12 Kommunikation mit jedem Automatisierungsgerät 14-18 mit dessen Sendetakt abwickelt, ist vorgesehen, dass ein dem jeweiligen Automatisierungsgerät 14-18 maximal möglicher Sendetakt durch einen der zentralen Einheit 12 maximal möglichen Sendetakt dividiert wird und das Divisionsergebnis als Untersetzung des Sendetaktes 12 der zentralen Einheit 12 für die Abwicklung von Kommunikation mit dem jeweiligen Automatisierungsgerät 14-18 verwendet wird.

Im Einzelnen bedeutet dies für die in FIG 1 exemplarisch dargestellten Automatisierungsgeräte 14-18, dass für das Automatisierungsgerät 14, dessen Sendetakt 28 1000µs dauert, dieser Zeitwert als maximal möglicher Sendetakt durch 250µs als maximal möglicher Sendetakt der zentralen Einheit 12 dividiert wird, woraus sich die ganze Zahl "vier" ergibt und entsprechend Kommunikation mit diesem Automatisierungsgerät 14 durch die zentrale Einheit 12 mit einer Untersetzung von "4" abgewickelt wird, d. h. die zentrale Einheit 12 kann in jedem vierten Sendetakt 26 ein Datenpaket 24 an dieses Automatisierungsgerät 14 senden.

Entsprechendes ergibt sich für das weitere Automatisierungsgerät 16 und dessen Sendetakt 30, wo sich bei einer Division von 500µs (maximal möglicher Sendetakt 30 dieses Automatisierungsgerätes 16) durch 250µs (maximal möglicher Sendetakt 26 der zentralen Einheit 12) die ganze Zahl "zwei" ergibt, was für die zentrale Einheit 12 und deren Kommunikation mit diesem Automatisierungsgerät 16 bedeutet, dass die zentrale Einheit 12 Datenpakete 24 an dieses Automatisierungsgerät 16 in jedem zweiten Sendetakt 26 versenden kann.

Für das letzte in FIG 1 dargestellte Automatisierungsgerät 18 ergibt sich für dessen Sendetakt 32 nach der Division von 250µs als maximal möglicher Sendetakt dieses Automatisierungsgerätes 18 durch 250µs als maximal möglicher Sendetakt der zentralen Einheit 12 die ganze Zahl "eins", was bedeutet, dass die zentrale Einheit 12 mit diesem Automatisierungsgerät 18 Datenpakete 24 in jedem Sendetakt 26 austauschen kann.

Für eine Erleichterung der Übersicht über die Empfänger, also die jeweiligen Automatisierungsgeräte 14-18, der von der zentralen Einheit 12 in deren Sendetakt 26 übermittelten Datenpakete 24 sind diese durch Schraffierung kenntlich gemacht. Datenpakete 24, die für das Automatisierungsgerät 14 mit dem Sendetakt 28 bestimmt sind, sind durch eine erste Schraffur und Datenpakete 24, die für das Automatisierungsgerät 16 mit dem Sendetakt 30 bestimmt sind, durch eine zweite Schraffur gekennzeichnet. Datenpakete 24, die schließlich für das Automatisierungsgerät 18 mit dem Sendetakt 32 bestimmt sind, sind ohne Schraffur dargestellt.

Wenn eine Verschränkung der Sendetakte 26-32, so wie in FIG 2 dargestellt, möglich ist, ergibt sich für die zentrale Einheit 12 eine weitgehende Gleichverteilung der zu übermittelnden Datenpakete 24, was insgesamt zu einer Gleichverteilung der Kommunikationslast in dem Automatisierungssystem 10 führt.

Damit eine Kommunikation der zentralen Einheit 12 mit jedem Automatisierungsgerät 14-18 mit dessen Sendetakt 28-32 möglich ist, ist vorgesehen, dass die zentrale Einheit 12 in einer Datenbasis 34 (FIG 1), die entweder von der zentralen Einheit 12 umfasst ist, oder auf die die zentrale Einheit 12 Zugriff hat, ggf. über den Bus 20, für jedes kommunikativ erreichbare Automatisierungsgerät 14- 18 eine Information zu dem diesen möglichen Sendetakt 28-32 speichert. Die Datenbasis 34 kann zu diesem Zweck eine gerätespezifische Konfigurationsdatei 36 beinhalten, von der diese Informationen umfasst sind.

Damit lässt sich die Erfindung kurz wie folgt darstellen: Es wird ein Verfahren zum Betrieb eines Automatisierungssystems 10 mit einer Anzahl kommunikativ zumindest mit einer zentralen Einheit 12 verbundener Automatisierungsgeräte 14-18, wobei jedes Automatisierungsgerät 14-18 Kommunikation entsprechend einem Sendetakt 28-32 abwickelt, vorgeschlagen, bei dem die zentrale Einheit 12 in einer Datenbasis 34 für jedes kommunikativ erreichbare Automatisierungsgerät 14-18 eine Information zu dem diesem möglichen Sendetakt 28-32 speichert und die zentrale Einheit 12 Kommunikation mit jedem Automatisierungsgerät 14-18 mit dessen Sendetakt 28-32 abwickelt.

## Patentansprüche

1. Verfahren zum Betrieb eines Automatisierungssystems (10) mit einer Anzahl kommunikativ zumindest mit einer zentralen Einheit (12) verbundener Automatisierungsgeräte (14, 16, 18), wobei jedes Automatisierungsgerät (14-18) Kommunikation entsprechend einem Sendetakt (26-32) abwickelt,
**dadurch gekennzeichnet, dass**
die zentrale Einheit (12) in einer Datenbasis (34) für jedes kommunikativ erreichbare Automatisierungsgerät (14-18) eine Information zu dem diesem möglichen Sendetakt (26-32) speichert und
die zentrale Einheit (12) Kommunikation mit jedem Automatisierungsgerät (14-18) mit dessen Sendetakt (26-32) abwickelt.

2. Verfahren nach Anspruch 1, wobei zum Abwickeln von Kommunikation mit jedem Automatisierungsgerät (14-18) derart, dass dessen Sendetakt (26-32) verwendet wird, ein dem jeweiligen Automatisierungsgerät (14-18) maximal möglicher Sendetakt (26-32) durch einen der zentralen Einheit (12) maximal möglichen Sendetakt (26-32) dividiert wird und das Divisionsergebnis als Untersetzung des Sendetaktes (26-32) der zentralen Einheit (12) für die Abwicklung von Kommunikation mit dem jeweiligen Automatisierungsgerät (14-18) verwendet wird.

3. Verfahren nach Anspruch 1 oder 2, wobei die Datenbasis (34) ein Ausschnitt aus einer gerätespezifischen Konfigurationsdatei (36) ist.

4. Verfahren nach Anspruch 3, wobei die gerätespezifische Konfigurationsdatei (36) Ergebnis einer Projektierung der zentralen Einheit (12) oder Ergebnis eines Initialisierungsverfahrens beim Anlauf des Automatisierungssystems (10) ist.

5. Computerprogramm mit durch einen Computer ausführbaren Programmcodeanweisungen zur Implementierung des Verfahrens nach einem der Ansprüche 1 bis 4 wenn das Computerprogramm auf einem Computer ausgeführt wird.

6. Speichermedium mit einem durch einen Computer ausführbaren Computerprogramm gemäß Anspruch 5.

7. Computersystem, insbesondere zentrale Einheit (12) eines Automatisierungssystems (10), auf dem ein Computerprogramm nach Anspruch 5 geladen ist.
